(19) Europäisches Patentamt
European Patent Office
Office européen des brevets

(11) **EP 3 608 711 A1**

(12) **EUROPEAN PATENT APPLICATION**
published in accordance with Art. 153(4) EPC

(43) Date of publication:
**12.02.2020 Bulletin 2020/07**

(51) Int Cl.:
***G02F 1/1337*** (2006.01)

(21) Application number: **17903277.6**

(22) Date of filing: **03.05.2017**

(86) International application number:
**PCT/CN2017/082812**

(87) International publication number:
**WO 2018/176565 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **01.04.2017 CN 201710212754**

(71) Applicant: **Shenzhen China Star Optoelectronics Technology Co., Ltd. Shenzhen, Guangdong 518132 (CN)**

(72) Inventor: **JIANG, Xiangwei 518132 Shenzhen Guangdong (CN)**

(74) Representative: **V.O. P.O. Box 87930 2508 DH Den Haag (NL)**

(54) **LIQUID CRYSTAL DISPLAY PANEL AND DEVICE**

(57)     A liquid crystal display panel and device. The liquid crystal display panel comprises data lines (11), a scan line (12), a first common line (21), a second common line (22), a main pixel part (101, 201), and a sub-pixel part (102, 202); the first common line (21) is used for providing a common voltage; the second common line (22) is used for making the voltage of the sub-pixel part (102, 202) equal to a fixed value, and the voltage of the main pixel part (101, 201) unequal to the voltage of the sub-pixel part (102, 202) when alignment is performed on the liquid crystal display panel.

FIG. 3

**Description**

BACKGROUND OF THE INVENTION

Field of Invention

The present disclosure relates to the field of liquid crystal display technology, and particularly to a liquid crystal display panel and a device.

Description of Prior Art

With the improvement on fineness of LCD panels, the pixel size is getting smaller and smaller; the pixel aperture rate is getting smaller accordingly, thus affecting the display brightness.

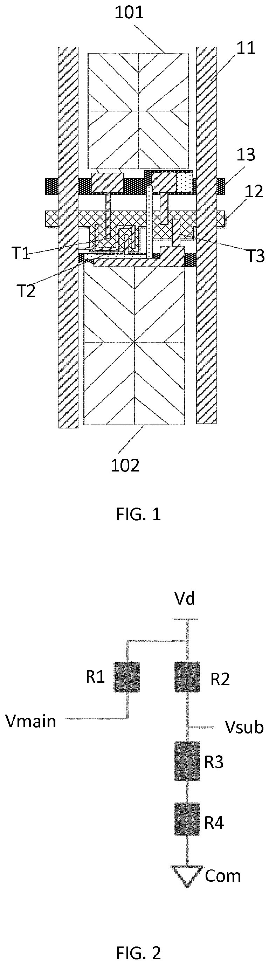

As Fig. 1 shows, in order to raise the display brightness, the conventional display panel comprises a main-pixel portion 101, a sub-pixel portion 102 and three thin film transistors T1-T3, gate electrodes of the thin film transistors T1-T3 are connected to a scanning line 12, source electrodes of the thin film transistors T1, T2 are connected to a data line 11, and the source electrode of the thin film transistor T3 is connected to a common line 13 through the deep-shallow hole. Where an internal resistance of the thin film transistor T3 is much smaller than an internal resistance of the thin film transistor T2, the size of the thin film transistor T3 is smaller than that of the thin film transistor T2. The potential of the sub-pixel portion 102 is lower than the potential of the main-pixel portion 101 by a function of the partial pressure of the resistances in the thin film transistors T2, T3, eight display domains are realized, further, the viewing angle is increased.

However, in the actual manufacturing process, the resistance fineness of the internal resistance of the thin film transistor T3 and the resistance of the deep-shallow hole are hard to control due to several effects caused by the film thickness, exposure process, and etching process. Hence, the internal resistance of the thin film transistor T3 and the resistance of the deep-shallow hole easily fluctuate, resulting in the subpixel unit 102 having an uneven voltage, and the alignment of the sub-pixel portion 102 tends to be uneven, hence, the display effect is reduced.

Therefore, it is necessary to provide a liquid crystal display panel and a device to solve the problems existing in the conventional art.

SUMMARY OF THE INVENTION

The objective of the present disclosure is to provide a liquid crystal display panel and a device to raise the display effect.

In order to solve the above technical problem, the present disclosure provides a liquid crystal display panel, which comprises
a data line, a scanning line, a first common line, a second common line, a main-pixel portion, and a sub-pixel portion. The first common line is for supplying a common voltage, the second common line is for making a voltage of the sub-pixel portion equal to a fixed value and a voltage of the main-pixel portion is different from the voltage of the sub-pixel portion, when the liquid crystal display panel is aligned. The voltage of the sub-pixel portion is obtained by a voltage inputted according to the second common line.

The main-pixel portion comprises a first thin film transistor and a first pixel electrode. The first thin film transistor comprises a first gate electrode, a first source electrode and a first drain electrode. The first gate electrode is connected to the scanning line. The source electrode is connected to the data line. The first drain electrode is connected to the first pixel electrode.

The sub-pixel portion comprises a second thin film transistor, a third thin film transistor and a second pixel electrode. The second thin film transistor comprises a second gate electrode, a second source electrode, and a second drain electrode. The third thin film transistor comprises a third gate electrode, a third source electrode, and a third drain electrode. The second gate electrode and the third gate electrode are connected to the scanning line. The second source electrode is connected to the data line. The second drain electrode is connected to the third drain electrode. The third drain electrode is connected to the second pixel electrode. The third source electrode is connected to the second common line.

In the liquid crystal display panel of the present disclosure, when the liquid crystal display panel is aligned, the voltage inputted by the second common line is equal to a voltage inputted from the data line, and the voltage inputted by the second common line is not equal to the voltage inputted by the first common line.

In the liquid crystal display panel of the present disclosure, the second common line and the data line are grounded.

In the liquid crystal display panel of the present disclosure, the voltage inputted by the second common line is equal to the voltage inputted by the first common line, when the liquid crystal display panel is displayed or the liquid crystal display panel is tested.

In the liquid crystal display panel of the present disclosure, the voltage of the sub-pixel portion is as below:

$$Vsub"=R2/(R2+R3+R4)*VCom2$$

VCom2 is the voltage inputted by the second common line. R1-R3 are respectively represented as internal resistors of the first thin film transistor, the second thin film transistor, and the third thin film transistor. R4 is represented as internal resistor of a deep-shallow hole. Vsub" is represented as the voltage of the sub-pixel portion.

The present disclosure provides a liquid crystal display panel, which comprises

a data line, a scanning line, a first common line, a second common line, a main-pixel portion, and a sub-pixel portion. The first common line is for supplying a common voltage, the second common line is for making a voltage of the sub-pixel portion equal to a fixed value and a voltage of the main-pixel portion is different from the voltage of the sub-pixel portion, when the liquid crystal display panel is aligned.

In the liquid crystal display panel of the present disclosure, the main-pixel portion comprises a first thin film transistor and a first pixel electrode. The first thin film transistor comprises a first gate electrode, a first source electrode and a first drain electrode. The first gate electrode is connected to the scanning line. The source electrode is connected to the data line. The first drain electrode is connected to the first pixel electrode.

The sub-pixel portion comprises a second thin film transistor, a third thin film transistor, and a second pixel electrode. The second thin film transistor comprises a second gate electrode, a second source electrode, and a second drain electrode. The third thin film transistor comprises a third gate electrode, a third source electrode, and a third drain electrode. The second gate electrode and the third gate electrode are connected to the scanning line. The second source electrode is connected to the data line. The second drain electrode is connected to the third drain electrode. The third drain electrode is connected to the second pixel electrode. The third source electrode is connected to the second common line.

In the liquid crystal display panel of the present disclosure, when the liquid crystal display panel is aligned, the voltage inputted by the second common line is equal to a voltage inputted from the data line, and the voltage inputted by the second common line is not equal to the voltage inputted by the first common line.

In the liquid crystal display panel of the present disclosure, the second common line and the data line are grounded.

In the liquid crystal display panel of the present disclosure, the voltage of the sub-pixel portion is obtained by a voltage inputted according to the second common line.

In the liquid crystal display panel of the present disclosure, the voltage inputted by the second common line is equal to the voltage inputted by the first common line, when the liquid crystal display panel is displayed or the liquid crystal display panel is tested.

The present disclosure provides a liquid crystal display device which comprises a back-light module and a liquid crystal display panel. The liquid crystal display panel comprises a data line, a scanning line, a first common line, a second common line, a main-pixel portion, and a sub-pixel portion. The first common line is for supplying a common voltage, the second common line is for making a voltage of the sub-pixel portion equal to a fixed value and a voltage of the main-pixel portion is different from the voltage of the sub-pixel portion, when the liquid crystal display panel is aligned.

In the liquid crystal display device of the present disclosure, the main-pixel portion comprises a first thin film transistor and a first pixel electrode. The first thin film transistor comprises a first gate electrode, a first source electrode, and a first drain electrode. The first gate electrode is connected to the scanning line. The source electrode is connected to the data line. The first drain electrode is connected to the first pixel electrode.

The sub-pixel portion comprises a second thin film transistor, a third thin film transistor, and a second pixel electrode. The second thin film transistor comprises a second gate electrode, a second source electrode, and a second drain electrode. The third thin film transistor comprises a third gate electrode, a third source electrode, and a third drain electrode. The second gate electrode and the third gate electrode are connected to the scanning line. The second source electrode is connected to the data line. The second drain electrode is connected to the third drain electrode. The third drain electrode is connected to the second pixel electrode. The third source electrode is connected to the second common line.

In the liquid crystal display device of the present disclosure, when the liquid crystal display panel is aligned, the voltage inputted by the second common line is equal to a voltage inputted from the data line, and the voltage inputted by the second common line is not equal to the voltage inputted by the first common line.

In the liquid crystal display device of the present disclosure, the second common line and the data line are grounded.

In the liquid crystal display device of the present disclosure, the voltage of the sub-pixel portion is obtained by a voltage inputted according to the second common line.

In the liquid crystal display device of the present disclosure, the voltage inputted by the second common line is equal to the voltage inputted by the first common line, when the liquid crystal display panel is displayed or the liquid crystal display panel is tested.

In the present disclosure, the liquid crystal display panel and the device keep the voltage of the sub-pixel portion constant during alignment process with adding additional common lines, the voltage unevenness of the sub-pixel portion is avoided to make the alignment be more even, the display effect raised accordingly.

BRIEF DESCRIPTION OF THE DRAWINGS

Fig. 1 is a schematic illustrative drawing of a conventional liquid crystal display panel.

Fig. 2 is an equivalent circuit diagram of a conventional liquid crystal display panel.

Fig. 3 is a schematic illustrative drawing of a liquid crystal display panel according to the present disclosure.

DETAILED DESCRIPTION OF THE PREFERRED EMBODIMENTS

The following description of the embodiments is directed to the attached drawings for illustrating specific embodiments in which the disclosure may be practiced. The terms of the present disclosure, such as "up", "down", "front", "post", "left", "right", "inside", "outside", "side", are merely directions referring to attached drawings. Thus, the directional language used is for the purpose of illustrating and understanding the invention and is not intended to be limiting of the invention. In the figure, units with similar structures are denoted by the same reference numerals.

Fig. 2 is an equivalent circuit diagram of a conventional liquid crystal display panel.

As shown in Fig. 2, the electrical principle of the conventional liquid crystal display panel is as follows: when the scanning line 12 is opened, the thin film transistors T2, T3 are turned on, and the internal resistance of the thin film transistors T2, T3 and the resistance of the deep-shallow hole constitute a voltage dividing circuit.

In the display process, the voltage of the sub-pixel portion 102 is as shown in Equation 1:

$$Vsub=(R3+R4)/(R2+R3+R4)*Vmain \qquad \text{Equation 1}$$

R1-R3 are respectively represented as internal resistors of the first thin film transistor T1, the second thin film transistor T2 and the third thin film transistor T3. R4 is represented as internal resistor of a deep-shallow hole. Vsub is represented as the voltage of the sub-pixel portion 102. Vmain is represented as the voltage of the main-pixel portion 101.

When the HVA light alignment, the voltage VCom of the common line 13 is AC voltage, such as amplitude of the voltage VCom is 12 Volts. The data line 11 is grounded, the voltage of the data line is Vd, meanwhile, the voltage Vsub' of the sub-pixel portion 102 is as shown in Equation 2:

$$Vsub'=R2/(R2+R3+R4)*VCom \qquad \text{Equation 2}$$

However, the actual manufacturing process is limited by the processes such as film formation, exposure process, and etching process, so that there are differences among the internal resistances R3, R4 in different regions of the display panel, resulting in differences among the voltages of the sub-pixel portion 102, hence, the aligning voltages of the sub-pixel portion 102 of the different regions are different, resulting in poor alignment.

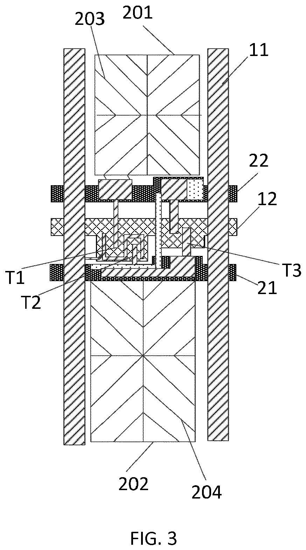

Fig. 3 is a schematic illustrative drawing of a liquid crystal display panel according to the present disclosure.

As shown in Fig. 3, the liquid crystal display panel of the present disclosure comprises a data line 11, a scanning line 12, a first common line 21, and a second common line 22. The liquid crystal display panel further comprises a main-pixel portion 201 and a sub-pixel portion 202.

The data line 11 is for inputting a data signal; the scanning line 12 is for inputting a scanning signal. The first common line 21 is for supplying a common voltage VCom1, the second common line 22 is for making a voltage of the sub-pixel portion 202 equal to a fixed value, in other words, keeping the voltage of the sub-pixel portion constant. The first common line 21 and the second common line 22 can be derived by patterning to the same metal layer. A voltage of the main-pixel portion 201 is different from the voltage of the sub-pixel portion 202.

In one embodiment, the main-pixel portion 201 comprises a first thin film transistor T1 and a first pixel electrode 203. The first thin film transistor T1 comprises a first gate electrode, a first source electrode, and a first drain electrode. The first gate electrode is connected to the scanning line 12. The source electrode is connected to the data line 11. The first drain electrode is connected to the first pixel electrode 203.

The sub-pixel portion 202 comprises a second thin film transistor T2, a third thin film transistor T3, and a second pixel electrode 204. The second thin film transistor T2 comprises a second gate electrode, a second source electrode, and a second drain electrode. The third thin film transistor T3 comprises a third gate electrode, a third source electrode, and a third drain electrode. The second gate electrode and the third gate electrode are connected to the scanning line 12. The second source electrode is connected to the data line 11. The second drain electrode is connected to the third drain electrode. The third drain electrode is connected to the second pixel electrode 204. The third source electrode is connected to the second common line 22.

When the liquid crystal display panel is aligned, the first common line 21 is inputted by an AC voltage, and the amplitude of the AC voltage is 12 Volts. The voltage inputted by the second common line 21 is equal to a voltage inputted from the data line 11, and the voltage inputted by the second common line 22 is not equal to the voltage inputted by the first common line 12. Furthermore, the second common line 22 and the data line 11 are grounded.

Meanwhile, the voltage Vsub" of the sub-pixel portion 202 is as equation 3:

$$Vsub"=R2/(R2+R3+R4)*VCom2 \qquad \text{Equation 3}$$

VCom2 is the voltage inputted by the second common line 22. R1-R3 are respectively represented as internal resistors of the first thin film transistor T1, the second thin film transistor T2 and the third thin film transistor T3. R4 is represented as internal resistor of a deep-shallow hole. Vsub" is represented as the voltage of the sub-pixel portion 102. In other words, the voltage of the sub-pixel portion 202 is obtained by a voltage inputted according to the second common line 22.

Since the second common line 22 is grounded, the voltage of Vsub" is equal to the ground voltage, that is, the voltage of the sub-pixel portion 202 is fixed, then, the voltage differences among the sub-pixel portions are uniform and are no longer affected by the internal resistances of the thin film transistors and the internal resistance of the deep-shallow hole, making the aligning voltages of the sub-pixel portion 202 of the entire liquid crystal display panel be the same, and the alignment defect is eliminated.

The voltage inputted by the second common line 22 is equal to the voltage inputted by the first common line 21, when the liquid crystal display panel is displayed or the liquid crystal display panel is tested, in other words, VCom2 is equal to VCom1. Specifically, the first common line 21 and the second common line 22 are electrically connected with each other during the display process or the testing process of the panel.

In the present disclosure, the liquid crystal display panel keeps the voltage of the sub-pixel portion constant during alignment process with adding additional common lines, to avoid the influences on the internal resistance of the third thin film transistor T3 and the resistance of the deep-shallow hole caused by the manufacturing process, hence, the voltage unevenness of the sub-pixel portion is avoided to make the alignment be more even, the display effect is raised accordingly.

The present disclosure further provides a liquid display device, which comprises a back-light module and a liquid crystal display panel, as shown in Fig. 3, the liquid crystal display panel comprises a data line 11, a scanning line 12, a first common line 21, and a second common line 22. The liquid crystal display panel further comprises a main-pixel portion 201 and a sub-pixel portion 202.

The data line 11 is for inputting a data signal; the scanning line 12 is for inputting a scanning signal. The first common line 21 is for supplying a common voltage VCom1, the second common line 22 is for making a voltage of the sub-pixel portion 202 equal to a fixed value, in other words, keeping the voltage of the sub-pixel portion constant. The first common line 21 and the second common line 22 can be derived by patterning to the same metal layer. A voltage of the main-pixel portion 201 is different from the voltage of the sub-pixel portion 202.

In one embodiment, the main-pixel portion 201 comprises a first thin film transistor T1 and a first pixel electrode 203. The first thin film transistor T1 comprises a first gate electrode, a first source electrode, and a first drain electrode. The first gate electrode is connected to the scanning line 12. The source electrode is connected to the data line 11. The first drain electrode is connected to the first pixel electrode 203.

The sub-pixel portion 202 comprises a second thin film transistor T2, a third thin film transistor T3, and a second pixel electrode 204. The second thin film transistor T2 comprises a second gate electrode, a second source electrode, and a second drain electrode. The third thin film transistor T3 comprises a third gate electrode, a third source electrode, and a third drain electrode. The second gate electrode and the third gate electrode are connected to the scanning line 12. The second source electrode is connected to the data line 11. The second drain electrode is connected to the third drain electrode. The third drain electrode is connected to the second pixel electrode 204. The third source electrode is connected to the second common line 22.

When the liquid crystal display panel is aligned, the first common line 21 is inputted by an AC voltage, and the amplitude of the AC voltage is 12 Volts. The voltage inputted by the second common line 21 is equal to a voltage inputted from the data line 11, and the voltage inputted by the second common line 22 is not equal to the voltage inputted by the first common line 12. Furthermore, the second common line 22 and the data line 11 are grounded.

Meanwhile, the voltage Vsub" of the sub-pixel portion 202 is as equation 3:

$$Vsub'' = R2/(R2+R3+R4)*VCom2 \qquad \text{Equation 3}$$

VCom2 is the voltage inputted by the second common line 22. R1-R3 are respectively represented as internal resistors of the first thin film transistor T1, the second thin film transistor T2, and the third thin film transistor T3. R4 is represented as internal resistor of a deep-shallow hole. Vsub" is represented as the voltage of the sub-pixel portion 102. In other words, the voltage of the sub-pixel portion 202 is obtained by a voltage inputted according to the second common line 22.

Since the second common line 22 is grounded, the voltage of Vsub" is equal to the ground voltage, that is, the voltage of the sub-pixel portion 202 is fixed, then, the voltage differences among the sub-pixel portions are uniform and are no longer affected by the internal resistances of the thin film transistors and the internal resistance of the deep-shallow hole, making the aligning voltages of the sub-pixel portion 202 of the entire liquid crystal display panel be the same, and the alignment defect is eliminated.

The voltage inputted by the second common line 22 is equal to the voltage inputted by the first common line 21, when the liquid crystal display panel is displayed or the liquid crystal display panel is tested, in other words, VCom2 is equal to VCom1. Specifically, the first common line 21 and the second common line 22 are electrically connected with each other during the display process or the testing process of the panel.

In the present disclosure, the liquid crystal display device keeps the voltage of the sub-pixel portion constant during alignment process with adding additional common lines, to avoid the influences on the internal resistance of the third thin film transistor T3 and the resistance of the deep-shallow hole caused by the manufacturing process, hence, the voltage unevenness of the sub-pixel portion is avoided to make the alignment more even, and the display effect is raised accordingly.

Although the present disclosure comprises been disclosed as preferred embodiments, the foregoing preferred embodiments are not intended to limit the present disclosure. Those of ordinary skill in the art, without departing from the spirit and scope of the present disclosure, can make various kinds of modifications and variations to the present disclosure. Therefore, the scope of the claims of the present disclosure must be defined.

**Claims**

1. A liquid crystal display panel, comprising a data line, a scanning line, a first common line, a second common line, a main-pixel portion, and a sub-pixel portion; the first common line being for supplying a common voltage, the second common line being for making a voltage of the sub-pixel portion equal to a fixed value and a voltage of the main-pixel portion is different from the voltage of the sub-pixel portion when the liquid crystal display panel is aligned; the voltage of the sub-pixel portion is obtained by a voltage inputted according to the second common line;

   wherein the main-pixel portion comprises a first thin film transistor and a first pixel electrode, the first thin film transistor comprises a first gate electrode, a first source electrode, and a first drain electrode, the first gate electrode is connected to the scanning line, the source electrode is connected to the data line, and the first drain electrode is connected to the first pixel electrode; and

   wherein the sub-pixel portion comprises a second thin film transistor, a third thin film transistor, and a second pixel electrode, the second thin film transistor comprises a second gate electrode, a second source electrode, and a second drain electrode, the third thin film transistor comprises a third gate electrode, a third source electrode, and a third drain electrode, the second gate electrode and the third gate electrode are connected to the scanning line, the second source electrode is connected to the data line, the second drain electrode is connected to the third drain electrode, the third drain electrode is connected to the second pixel electrode, and the third source electrode is connected to the second common line.

2. The liquid crystal display panel according to claim 1, wherein:
   when the liquid crystal display panel is aligned, the voltage inputted by the second common line is equal to a voltage inputted from the data line, and the voltage inputted by the second common line is not equal to the voltage inputted by the first common line.

3.  The liquid crystal display panel according to claim 2, wherein the second common line and the data line are grounded.

4.  The liquid crystal display panel according to claim 1, wherein the voltage inputted by the second common line is equal to the voltage inputted by the first common line, when the liquid crystal display panel is displayed or the liquid crystal display panel is tested.

5.  The liquid crystal display panel according to claim 1, wherein the voltage of the sub-pixel portion is as below:

$$Vsub"=R2/(R2+R3+R4)*VCom2$$

wherein VCom2 is the voltage inputted by the second common line, R1-R3 are respectively represented as internal resistors of the first thin film transistor, the second thin film transistor and the third thin film transistor, R4 is represented as internal resistor of a deep-shallow hole, Vsub" is represented as the voltage of the sub-pixel portion.

6.  A liquid crystal display panel, comprising: a data line, a scanning line, a first common line, a second common line, a main-pixel portion, and a sub-pixel portion; the first common line being for supplying a common voltage, the second common line being for making a voltage of the sub-pixel portion equal to a fixed value and a voltage of the main-pixel portion is different from the voltage of the sub-pixel portion when the liquid crystal display panel is aligned.

7.  The liquid crystal display panel according to claim 6, wherein

    the main-pixel portion has a first thin film transistor and a first pixel electrode, the first thin film transistor has a first gate electrode, a first source electrode and a first drain electrode, the first gate electrode is connected to the scanning line, the source electrode is connected to the data line, and the first drain electrode is connected to the first pixel electrode;
    the sub-pixel portion has a second thin film transistor, a third thin film transistor and a second pixel electrode, the second thin film transistor has a second gate electrode, a second source electrode, and a second drain electrode, the third thin film transistor has a third gate electrode, a third source electrode, and a third drain electrode, the second gate electrode and the third gate electrode are connected to the scanning line, the second source electrode is connected to the data line, the second drain electrode is connected to the third drain electrode, the third drain electrode is connected to the second pixel electrode, and the third source electrode is connected to the second common line.

8.  The liquid crystal display panel according to claim 6, wherein:
    when the liquid crystal display panel is aligned, the voltage inputted by the second common line is equal to a voltage inputted from the data line, and the voltage inputted by the second common line is not equal to the voltage inputted by the first common line.

9.  The liquid crystal display panel according to claim 8, wherein the second common line and the data line are grounded.

10. The liquid crystal display panel according to claim 6, wherein the voltage of the sub-pixel portion is obtained by a voltage inputted according to the second common line.

11. The liquid crystal display panel according to claim 6, wherein the voltage inputted by the second common line is equal to the voltage inputted by the first common line when the liquid crystal display panel is displayed or the liquid crystal display panel is tested.

12. A liquid crystal display device, comprising:

    a back-light module; and
    a liquid crystal display panel, comprising: a data line, a scanning line, a first common line, a second common line, a main-pixel portion, and a sub-pixel portion; the first common line being for supplying a common voltage, the second common line being for making a voltage of the sub-pixel portion equal to a fixed value and a voltage of the main-pixel portion is different from the voltage of the sub-pixel portion when the liquid crystal display panel is aligned.

13. The liquid crystal display device according to claim 12, wherein

the main-pixel portion has a first thin film transistor and a first pixel electrode, the first thin film transistor has a first gate electrode, a first source electrode, and a first drain electrode, the first gate electrode is connected to the scanning line, the source electrode is connected to the data line, the first drain electrode is connected to the first pixel electrode;

the sub-pixel portion has a second thin film transistor, a third thin film transistor, and a second pixel electrode, the second thin film transistor has a second gate electrode, a second source electrode, and a second drain electrode, the third thin film transistor has a third gate electrode, a third source electrode, and a third drain electrode, the second gate electrode and the third gate electrode are connected to the scanning line, the second source electrode is connected to the data line, the second drain electrode is connected to the third drain electrode, the third drain electrode is connected to the second pixel electrode, and the third source electrode is connected to the second common line.

14. The liquid crystal display device according to claim 12, wherein:
when the liquid crystal display panel is aligned, the voltage inputted by the second common line is equal to a voltage inputted from the data line, and the voltage inputted by the second common line is not equal to the voltage inputted by the first common line.

15. The liquid crystal display device according to claim 14, wherein the second common line and the data line are grounded.

16. The liquid crystal display device according to claim 12, wherein the voltage of the sub-pixel portion is obtained by a voltage inputted according to the second common line;

17. The liquid crystal display device according to claim 12, wherein the voltage inputted by the second common line is equal to the voltage inputted by the first common line when the liquid crystal display panel is displayed or the liquid crystal display panel is tested.

FIG. 1

FIG. 2

FIG. 3

# INTERNATIONAL SEARCH REPORT

| International application No. |
| --- |
| PCT/CN2017/082812 |

**A. CLASSIFICATION OF SUBJECT MATTER**

G02F 1/1337 (2006.01) i

According to International Patent Classification (IPC) or to both national classification and IPC

**B. FIELDS SEARCHED**

Minimum documentation searched (classification system followed by classification symbols)

G02F

Documentation searched other than minimum documentation to the extent that such documents are included in the fields searched

Electronic data base consulted during the international search (name of data base and, where practicable, search terms used)

CNPAT, CNKI, WPI, EPODOC: 配向, 取向, 定向, 测试, 检测, 显示, 液晶, 两, 二, 多, 公共, 公用, 共用, 共同, 主, 第一, 子, 次, 第二, 亚, 辅, 像素, 象素, 画素, 放电, 泄, 电, 初始化, 重置, 归零, 零, 复位, 接地, 固定, 一定, 不均, 色偏, 华星光电, sub+, second, pixel?, align+, direct+, discharge, reset+, init+, fix+, vss, zero, common, line?, liquid, LCD, display

**C. DOCUMENTS CONSIDERED TO BE RELEVANT**

| Category* | Citation of document, with indication, where appropriate, of the relevant passages | Relevant to claim No. |
| --- | --- | --- |
| A | US 2015168772 A1 (SAMSUNG DISPLAY CO., LTD.), 18 June 2015 (18.06.2015), description, paragraphs [0113]-[0127], and figure 6 | 1-17 |
| A | CN 101144947 A (SVA OPTRONICS CO., LTD.), 19 March 2008 (19.03.2008), entire document | 1-17 |
| A | CN 105242425 A (SHENZHEN CHINA STAR OPTOELECTRONICS TECHNOLOGY CO., LTD.), 13 January 2016 (13.01.2016), entire document | 1-17 |
| A | CN 103460124 A (JAPAN DISPLAY INC.), 18 December 2013 (18.12.2013), entire document | 1-17 |
| A | CN 104698643 A (SHENZHEN CHINA STAR OPTOELECTRONICS TECHNOLOGY CO., LTD.), 10 June 2015 (10.06.2015), entire document | 1-17 |
| A | CN 104483792 A (SHENZHEN CHINA STAR OPTOELECTRONICS TECHNOLOGY CO., LTD.), 01 April 2015 (01.04.2015), entire document | 1-17 |
| A | CN 103744208 A (SHENZHEN CHINA STAR OPTOELECTRONICS TECHNOLOGY CO., LTD.), 23 April 2014 (23.04.2014), entire document | 1-17 |

☒ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 24 December 2017 | 03 January 2018 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer LI, Peipei Telephone No. (86-10) 62414010 |
| --- | --- |

Form PCT/ISA/210 (second sheet) (July 2009)

## INTERNATIONAL SEARCH REPORT

| International application No. |
| --- |
| PCT/CN2017/082812 |

### C (Continuation). DOCUMENTS CONSIDERED TO BE RELEVANT

| Category* | Citation of document, with indication, where appropriate, of the relevant passages | Relevant to claim No. |
| --- | --- | --- |
| A | CN 102393589 A (NANJING CEC PANDA LCD TECHNOLOGY CO., LTD.), 28 March 2012 (28.03.2012), entire document | 1-17 |
| A | TW 200949400 A (CHIMEI INNOLUX CORPORATION), 01 December 2009 (01.12.2009), entire document | 1-17 |

Form PCT/ISA/210 (continuation of second sheet) (July 2009)

## INTERNATIONAL SEARCH REPORT
### Information on patent family members

| | International application No. |
|---|---|
| | PCT/CN2017/082812 |

| Patent Documents referred in the Report | Publication Date | Patent Family | Publication Date |
|---|---|---|---|
| US 2015168772 A1 | 18 June 2015 | US 9778521 B2 | 03 October 2017 |
| | | KR 20150070776 A | 25 June 2015 |
| CN 101144947 A | 19 March 2008 | CN 100526961 C | 12 August 2009 |
| CN 105242425 A | 13 January 2016 | US 2017192330 A1 | 06 July 2017 |
| | | CN 105242425 B | 15 March 2017 |
| | | WO 2017063204 A1 | 20 April 2017 |
| CN 103460124 A | 18 December 2013 | KR 20140133963 A | 20 November 2014 |
| | | CN 103460124 B | 10 August 2016 |
| | | US 2014055430 A1 | 27 February 2014 |
| | | WO 2012137541 A1 | 11 October 2012 |
| | | JP 5707488 B2 | 30 April 2015 |
| | | US 9424786 B2 | 23 August 2016 |
| | | KR 20140133962 A | 20 November 2014 |
| | | KR 20130131466 A | 03 December 2013 |
| CN 104698643 A | 10 June 2015 | US 2017039966 A1 | 09 February 2017 |
| | | GB 2550307 | 15 November 2017 |
| | | WO 2016149995 A1 | 29 September 2016 |
| | | KR 20170105067 | 18 September 2017 |
| | | US 9633619 B2 | 25 April 2017 |
| CN 104483792 A | 01 April 2015 | WO 2016101373 A1 | 30 June 2016 |
| | | US 2016246140 A1 | 25 August 2016 |
| | | CN 104483792 | 12 April 2017 |
| CN 103744208 A | 23 April 2014 | CN 103744208 | 25 May 2016 |
| | | WO 2015109621 A1 | 30 July 2015 |
| | | US 2015205177 A1 | 23 July 2015 |
| | | US 9268184 B2 | 23 February 2016 |
| CN 102393589 A | 28 March 2012 | CN 102393589 B | 05 August 2015 |
| TW 200949400 A | 01 December 2009 | US 2009295703 A1 | 03 December 2009 |
| | | TW I382261 B | 11 January 2013 |

Form PCT/ISA/210 (patent family annex) (July 2009)